# EUROPEAN PATENT SPECIFICATION

(11) **EP 1 645 508 B1**
(45) Date of publication and mention of the grant of the patent: **22.07.2015**
(21) Application number: 05076447.1
(22) Date of filing: 02.04.2003
(51) Int. Cl.: B64D 45/00, E06B 5/10, E06B 5/12, B64C 1/14, F41H 5/04

(54) **Ballistic resistant flight deck door and method of making same**
Ballistische Cockpittür und Herstellungsverfahren
Porte pare-balles pour un poste de pilotage et procédé de fabrication

(30) Priority: 05.04.2002 US 370365 P; 05.04.2002 US 370432; 03.01.2003 US 336592
(43) Date of publication of application: 12.04.2006
(62) Divisional of application: 03075979.9
(73) Proprietor: The Boeing Company, Chicago, IL 60606-1596 (US)
(72) Inventor: Cloud, Michael J., Snohomish, WA 98296 (US); Dovey, John V., Seattle, WA 98124-2207 (US)
(74) Representative: Witte, Weller & Partner Patentanwälte mbB

(56) References cited:
- EP-A- 0 488 465
- US-A- 4 428 998
- US-A- 4 737 402
- US-A- 5 160 776

## Description

This application is directed to a method for forming an armor layer, in particular for making a ballistic resistant flight deck door.

Most aircraft have a fuselage which defines a passenger section, a cargo section, and a pilot or flight deck section. Most of the passenger section and the flight deck are pressurized portions of the aircraft adapted to carrying people. The flight deck is generally separated from the passenger area by a door, sometimes referred to as the "cockpit door", which limits entry to the flight deck but is not meant to be impenetrable by a firearm or person, even when closed.

Most often the flight deck door simply provides a temporary impediment between the passenger section and the flight deck or pilot section. Most often it functions to simply isolate the pilots from the passengers so that they are not disturbed by the passengers during a flight. The flight deck door may also provide acoustic dampening for the flight deck, both to assist in quieting the flight deck and to shield the flight deck from the noise generated in the passenger area. In particular, the flight deck is generally situated at the front of an aircraft and therefore it is buffeted most by the oncoming wind of the atmosphere as the aircraft proceeds in flight. This wind noise can be particularly loud in the flight deck, but is dampened by an appropriately constructed flight deck door.

Recent events, however, have also made it desirable to provide a greater degree of fortitude to the flight deck door. In particular, it has become desirable to make the flight deck door substantially impervious to ballistic and intruder attacks. It is desirable to add these features so that if an attacker is amongst the passengers, in the passenger area, the flight deck door will provide a substantial, if not impervious, blockade to any attack by a person on the pilot and co-pilot. In this way the pilot can continue to control the aircraft regardless of the action of an attacker in the passenger section and guide the plane to safety. Furthermore, this can reduce or substantially eliminate the possibility that a person in the passenger section gains unauthorized access to the flight deck to gain control of the aircraft.

From US 5 160 776 A a method for forming an armor layer is known which comprises the steps of providing a first layer of an armor material including a fiber structure with a resin surrounding the fibers;
providing a second layer of an armor material including a fiber structure with a resin surrounding the fibers;
raising the first layer adjacent the second layer; applying a pressure of 420 psi (2900 kPa) for a period of 40 minutes at a temperature of 124 °C. Thereby the armor layer is fully formed.

A similar method is known from US 4 737 402 A which discloses the utilization of a temperature of approximately 130°C and a pressure of approximately 552 kPa (80 psi) for consolidating severs layers of fiber structures which are impregnated with resin surrounding the fibers.

In view of this it is an object of the invention to disclose a method for forming an improved armor layer having a good ballistic resistance.

This object is solved by a method according to claim 1.

Further embodiments are subject of the dependent claims.

For example, the present invention may provide a method of making a flight deck door which includes an open cell core and an armor laminate, as defined in dependent claim 5.

In particular, the open cell core can provide an acoustic dampening function when placed on the flight deck side of the flight deck door. The sound waves impinge the open cell structure and are dampened therein. The flight deck door may also not include the noise dampening structures.

As defined in claim 1, the present invention includes a method for forming an armor layer for a door. The armor layer is formed including providing a first layer of an armor material including a fiber structure with a resin surrounding the fibers, providing a second layer of an armor material comprising a fiber structure with a resin surrounding the fibers, and placing the first layer adjacent the second layer. Pressure is then applied at least 34.5 kPa (5 pounds per square inch) but less than 207 kPa (30 psi) to the first layer and the second layer. The layers together are then heated to at least 120° C. The layers are kept under the pressure and temperature simultaneously and continuously for at least about 30 minutes.

Further areas of applicability of the present invention will become apparent from the detailed description provided hereinafter. It should be understood that the detailed description and specific examples, while indicating the preferred embodiments of the invention, are intended for purposes of illustration only and are not intended to limit the scope of the invention.

The present invention will become more fully understood from the detailed description and the accompanying drawings, wherein:
Figure 1 is a detail perspective view of an aircraft with a flight deck;
Figure 2 is a cross-sectional view of ballistic and intruder resistant flight deck door including acoustic dampening effects along line A-A of Figure 1; and
Figure 3 is a cross-sectional view of a ballistic resistant and intruder proof flight deck door along line A-A of Figure 1 according to a second embodiment.

### DETAILED DESCRIPTION OF THE PREFERRED EMBODIMENTS

The following description of the preferred embodiment(s) is merely exemplary in nature and is in no way intended to limit the invention, its application or uses.

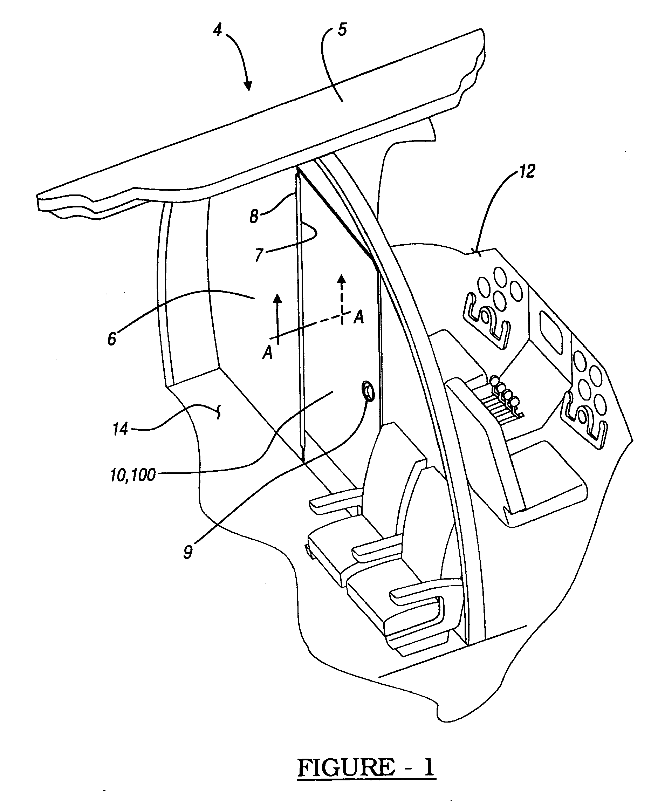

With reference to figure 1 an aircraft 4 includes an exterior skin 5 defining a fuselage. The inside of the aircraft 4 includes a flight deck wall 6 including a flight deck door 10. The flight deck wall 6 and flight deck door 10 separate the flight deck area or side 12 from the passenger area or side 14. The flight deck door 10 allows restricted access to the flight deck side 12 from the passenger side 14. The flight deck door 10 may also be used as a door at other locations within the fuselage if desired. Generally, the flight deck door 10 is formed to fit into a door jam in the flight deck wall 6. One side the flight deck door 10 includes a hinge 7 which mates with a hinge 8 of the door jam. This allows the flight deck door 10 to be easily opened and closed. Also, the flight deck door 10 includes a door latch or locking mechanism 9. The locking mechanism 9 mates with a jam locking mechanism (not particularly shown) on the door jam to lock the flight deck door 10 in a closed position. The particulars of these portions are not relevant to the present invention, but are understood to be a part of any functioning flight deck door 10.

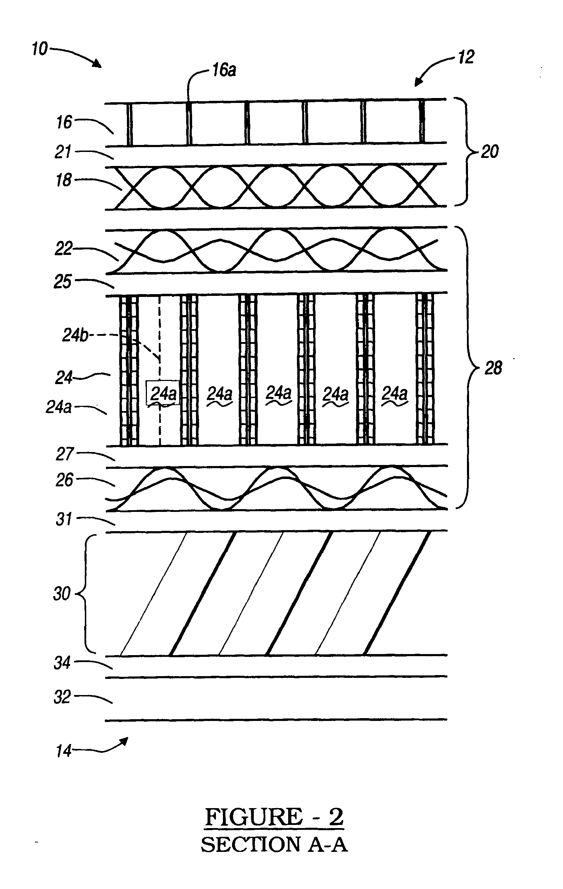

With reference to Figure 2, a cross section of the an intrusion and bullet proof and acoustic dampening flight deck door along line A-A is illustrated according to a first preferred embodiment. Though it is understood that the physical dimensions of the section is not proportional to more clearly illustrate the flight deck door 10. The flight deck door 10 is installed in the aircraft 4 such that a first or flight deck side 12 faces the flight deck and a second or passenger side 14 faces a passenger compartment.

The flight deck door 10 is a laminated door comprising a plurality of individual layers. Each layer is affixed to an adjacent layer with an appropriate method. Generally, either cold curing or heated curing is used along with appropriate adhesives. Cold curing is used to define an adhesive or process that cures at generally room temperature or about 21° C (70° F). Heated curing is any method which requires heating to a temperature greater than room temperature. Each layer provides a certain amount of rigidity to the flight deck door 10. The entire flight deck door 10, however, is preferably approximately 25.4 mm (1.0 inch) thick. It will be understood that the flight deck door 10 may also include a door which is thicker than 1.0 inch, but excessively thick doors are generally undesirable because of the added weight they impose.

The flight deck door 10 includes a first layer 16 that comprises a perforated decorative laminate. The first layer 16 simply provides a decorative covering to the flight deck door 10. It would be understood that the decorative laminate may be any appropriate decorative material. It will be understood, however, that if decoration or aesthetics are not a primary concern, then the first layer 16 is not needed. Perforations 16a in the first layer 16 also provide the initial acoustic dampening feature. Therefore, if a first layer 16 is desired, it is preferably perforated. The first layer 16, however, also provides a degree of rigidity to the flight deck door 10.

A second layer 18 is an acoustic fabric. Part of the function of the flight deck door 10 is to dampen acoustic noise from the flight deck side 12. The second layer 18 provides a first means of acoustic dampening by providing a first muffling layer for the flight deck door 10. The perforations in the first layer 16 allow sound waves to pass therethrough and become initially muffled in the second layer 18, while also continuing through the second layer 18.

The first layer 16 and second layer 18 form a first laminate section 20. The first laminate section 20 is held together by a suitable adhesive layer 21, and preferably a room temperature adhesive, such as that generally known in the art, to provide a permanent attachment of the first layer 16 to the second layer 18. Preferably the adhesive layer 21 is a two part polyester cold curing adhesive. It will be understood, however, that if a decorative laminate first layer 16 is not desired, then the first section 20 will include only the second layer 18.

A third layer 22 includes a fiberglass epoxy prepreg. The fiberglass epoxy prepreg preferably comprises a "fly screen fabric". The third layer 22 generally includes fiberglass strands interweaved to form an open square lattice structure, similar to that of a house window screen. The open holes in the third layer 22 generally have a side length between about 0.10 inch and about 0.50 inch (about 0.25 cm and about 1.30 cm). Furthermore, the fiberglass strands of the third layer 22 are pre-impregnated with an epoxy. The third layer 22 provides some rigidity and strength to the flight deck door 10 and does not require a separate adhesive to affix it to a fourth layer 24. In particular, the epoxy not only provides rigidity to the third layer 22, but also functions as an adhesive layer 25 between the third layer 22 and the fourth layer 24 to secure these layers. It will be understood, however, that the adhesive layer 25 may include a separate appropriate adhesive if required.

The fourth layer 24 is a honeycomb acoustic core. In particular, the fourth layer 24 includes a plurality of open cells 24a. Each open cell 24a is formed along a central axis 24b and the central axis 24b is arranged perpendicular to the plane formed by the flight deck door 10. Each cell of the fourth layer 24 has a length of between about 0.50 inches and about 1.0 inches (about 1.25 cm and about 2.50 cm) and cross-sectional diameter of between about 0.05 inches and about 0.50 inches (about 1.00 cm and about 1.50 cm). The fourth layer 24 provides the main acoustic dampening feature of the flight deck door 10. Sound waves enter the open cell structure of the fourth layer 24 and lose most of their energy in the open cell structure.

A fifth layer 26 includes a second fiberglass epoxy prepreg layer. The fifth layer 26 is substantially similar to the third layer 22 described above. It will also be understood that the fifth layer 26 can form the adhesive layer 27, between the fourth layer 24 and the fifth layer 26, a distinct adhesive layer 27 may also be provided. The third layer 22, fourth layer 24, and fifth layer 26 form a second section 28 which is cured in a multi-opening press. The multi-opening press (not illustrated) is commonly known in the art. Generally, the multi-opening press receives a plurality of layers which can be laminated and cured under the same physical conditions. Therefore, a plurality of second sections 28 can be formed at one time in a multi-opening press.

A sixth layer is an armor layer 30. The armor layer 30 may include any appropriate armor material. Preferably the armor layer 30 includes a plurality of Kevlar® armor layers. Kevlar® armor is known to provide substantial ballistic resistance to firearm projectiles. The armor layer 30 generally includes preferably between about 15 and about 25 Kevlar® armor layers. The armor layer 30 is generally between about 0.10 inch and about 0.60 inch thick (about 0.25 cm and about 1.52 cm). More preferably, layers of Kevlar®, impregnated with a PVB phenolic resin at about 15% fluidizable resin, are employed to provide the desired ballistic resistance. These individual Kevlar® armor layers are laminated to form the armor layer 30, described further herein. The armor layer 30 is affixed to the second section with an adhesive layer 31. The adhesive layer may be any appropriate adhesive that is known in the art, such as a two part epoxy cold curing adhesive.

A seventh layer 32 is a second decorative laminate. The seventh layer 32 need not be perforated as is the first layer 16. The seventh layer 32 does not need to provide an acoustic dampening function for the passenger compartment. The seventh layer 32 is employed simply to blend the flight deck door 10 into the surroundings of the passenger compartment. Additionally, an adhesive layer 34 of any appropriate and known adhesive is used to affix the seventh layer 32 to the exterior of the armor layer 30.

The flight deck door 10 according to the first embodiment includes acoustic dampening properties. In particular, the flight deck door 10 is particularly well suited for use in a Boeing 747-400 aircraft. It is understood, however, that the acoustic dampening properties of the flight deck door 10 may be used in any appropriate aircraft and are not limited to a Boeing 747-400 aircraft.

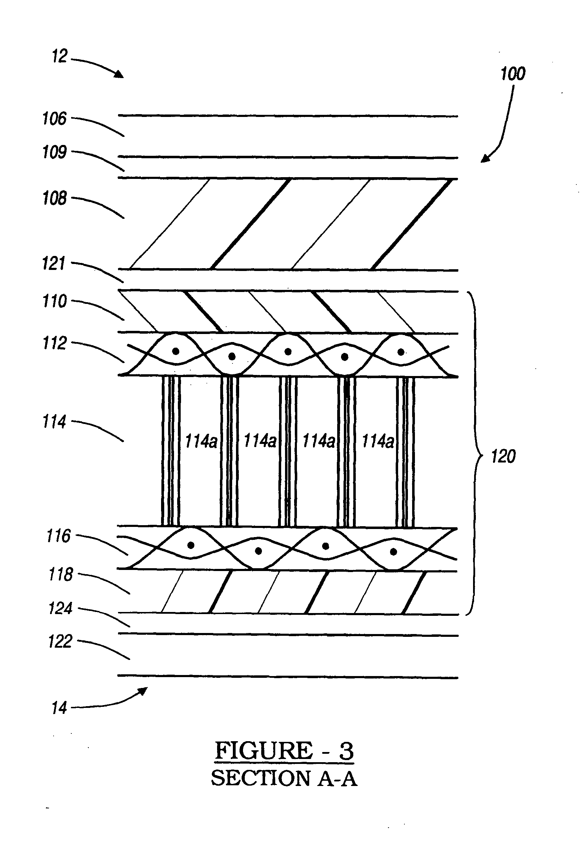

With reference to Figure 1 and 3, a second embodiment of an intrusion resistant and bullet proof flight deck door 100 is illustrated. The flight deck door 100 is installed in the flight deck wall 6 of an aircraft 4 including hinges 7 and 8 and a door latch 9 the flight deck side 12 and the passenger side 14. The flight deck door 100 is a laminated door comprising a plurality of individual layers. Each layer is affixed to an adjacent layer with an appropriate method. Generally, either cold curing or heated curing, as described herein, is used along with the appropriate adhesives. Each layer provides a certain amount of rigidity to the flight deck door 100. The entire flight deck door 100, however, is approximately 25.4 mm (1.0 inch) thick. It will be understood that the flight deck door 100 may also include a door which is thicker than 1.0 inch, but limiting the weight of the door is also an important counter veiling consideration in any door design desirable to be as small as possible thereby reducing weight on the aircraft.

A first decorative laminate layer 106 on the flight deck side 12 provides an aesthetic covering for the flight deck door 100. It will be understood that the decorative laminate layer 106 may be an appropriate decorative laminate. Additionally, an adhesive layer 109 of any appropriate and known adhesive is used to affix the first layer 106 to the exterior of the armor layer 108. It will also be understood that the first decorative laminate layer 106 is not absolutely necessary for the flight deck door 100. In particular, if aesthetics are not a primary concern, the first decorative laminate layer 106 can be omitted.

Next, an armor layer 108 provides ballistic and intruder resistance to the flight deck door 100. The armor layer 108 includes preferably between about 10 and about 15 armor laminate layers. Preferably, Kevlar® laminate layers are used, though it will be understood any appropriate number of any appropriate armor laminate may be used. More preferably about 12 layers of Kevlar® laminate layers are laminated together to form the armor layer 108. The armor layer 108 is preferably between about 0.25 cm and about 0.76 cm (about 0.10 inch and about 0.30 inch) thick. The armor layer 108 is formed in a process similar to the process of forming the armor layer 30.

A third or first minor armor layer 110 may also include Kevlar® armor layers. The third layer 110 provides additional rigidity, as well as a degree of ballistic and intrusion resistance to the flight deck door 100. It is understood, however, that the armor layer 108 provides substantially all of the ballistic and intruder resistance of the flight deck door 100. The third layer 110 comprises between about 2 and about 5 laminate armor layers. Preferably, Kevlar ® 745 armor is used. Again, the formation of the third layer 110 is substantially identical to the formation of the armor layer 108.

The fourth layer 112 is a fiberglass phenolic prepreg. The fiberglass phenolic prepreg comprises a "woven fabric". The fourth layer 112, however, includes about 40% fluidizable resin. Therefore, there is a greater resin volume between the third layer 110 and the core or fifth layer 114. This provides a substantial amount of resin which allows the armor layer 108 to bond to the core layer 114.

The core layer 114 is preferably between about 0.40 and about 0.80 inches thick. The core layer 114 may be similar or identical to the honeycomb layer 24 of door 10 or may be formed by any other appropriate core layer of material. Preferably, the core layer 114 of the flight deck door 100 is a material other than the core layer 24 according to the first embodiment, In particular, the core layer 114 is a honeycomb layer which includes an open cell 114a and is approximately 128 kg/m³ (8 pounds per cubic foot). It will be understood, however, that if other layers provide sufficient rigidity, then the core layer 114 may be omitted.

A sixth layer 116 is a second layer of the fiberglass phenolic prepreg. While a seventh or second minor armor layer 118 is another layer of armor laminate. The seventh layer 118 is substantially similar to the third layer 110 described above. The third layer 110 through the seventh layer 118 are formed together in a multi-opening press to form a main section 120. Furthermore, each Kevlar® armor layer of the minor armor layers 110 and 118 may be placed in the multi-opening press separately and cured with the main section 120. This removes additional steps of individually laminating and curing the minor armor layers 110 and 118.

The main section 120 provides the backbone to which the armor layer 108 is affixed with an adhesive layer 121. It will be understood that the adhesive layer 121 is any appropriate and known adhesive such as a two part epoxy cold curing adhesive. Furthermore, the main section 120 is affixed together with the fluidizable resin from the fiberglass phenolic prepreg of the fourth layer 112 and the sixth layer 116. It will be understood, however, that a separate adhesive may be used if desired.

Finally, an eighth layer 122 includes a decorative laminate. The eighth layer 122 may be any appropriate decorative laminate. Again, it will be understood that if aesthetics are not a primary concern of the flight deck door 100 the decorative laminate 122 may be eliminated. Also, an adhesive layer 124 of any appropriate and known adhesive is used to affix the eighth layer 122 to the main section 120.

The flight deck door 100, according to the second preferred embodiment, does not include any acoustic dampening material that the door 10 includes. Thus, the flight deck door 100, does not include any acoustic dampening layer on the flight deck side 12. Neither the first layer 106 or the armor layer 108 are acoustically dampening. The armor layer 108 provides the ballistic intrusion resistance of the flight deck door 100.

The armor layers 30 and 108, and minor armor layers 110 and 118, of the main section 120, are formed preferably of Kevlar® armor layers. The armor layers 30, 108 and the main section 120 are also formed in a multi-opening press. Additionally, the armor layers 30, 108 and the main section 120 are formed under the same physical circumstances and conditions so that these layers may be formed at one time in a multi-opening press. Alternately, numerous layers of a particular armor layer, such as the armor layer 30, or main section 120 can be formed at one time.

While the armor layer 30 will be referenced in the following description of forming the armor layer, it will be understood that the other armor layers 108, and main section 120 are formed in a substantially similar manner. The armor layer 30 includes preferably 20 Kevlar® armor layers. These 20 Kevlar® armor layers are placed into a multi-opening press one on top of another. They are then subjected to temperatures of between about 120° C and about 146° C (250° F and about 295° F) and between about 34.5 kPa and about 207kPa (5 and about 30 pounds per square inch (psi)) of pressure. The plurality of individual layers of Kevlar® armor are subjected to these conditions for as little as about 30 minutes, and generally between about 60 minutes and about 120 minutes. This process forms the armor layer 30 when the plurality of individual Kevlar® armor layers have been cured and are then affixed together as a single layer or substructure. Nevertheless, the armor layer 30 is formed as a discrete laminate layer. After curing, the armor layer 30 is then cut to the desired dimensions needed to form the flight deck door 10, and is affixed to section 28 with a cold curing adhesive. Cold curing adhesive is defined to include any adhesive which is not required to be heated to cure properly. It will be understood, however, that a heat cured adhesive may also be used.

The process described above does not substantially reduce or hinder the effectiveness of the individual Kevlar® armor layers. For example, the lattice structure of the Kevlar® fibers is only minimally compressed or substantially uncompressed because low pressures are used in the process described above. Therefore, they are able to move and deflect the energy of a projectile as it enters the armor layer 30. Kevlar® armor layers provide ballistic resistance by deflecting and absorbing the energy of a projectile. If the fibers of the Kevlar® armor layers are compressed there is less space for them to move, thereby reducing the ballistic effectiveness of any one Kevlar® armor sub-layer.

Additionally, the low processing temperatures allow the resin to be less brittle in the individual Kevlar® armor layers. The greater the processing temperature of the Kevlar® armor layers, the lower the ballistic effectiveness becomes of the armor layer 30.

The armor layer 108 of the flight deck door 100 preferably includes only twelve layers of Kevlar® armor material. The construction and processing techniques described above reduce the number of layers required to provide the equivalent ballistic resistance of a greater number of layers. The armor layer 30 of the flight deck door 10 includes approximately twenty Kevlar® armor layers due to the fact that section 28 reduces the deflection of the armor layer 30. In particular, as described above, the armor layer 30 works best when it is able to deflect a distance to reduce the energy of the projectile. If that deflection is reduced, due to exterior or other constraints, such as section 28, then the armor layer 30 must be increased in thickness.

The flight deck doors 10 and 100 provide a significant degree of ballistic resistance. That is, the flight deck doors 10 and 100 completely stop many ballistic projectiles fired from a weapon. Effective penetration is when a projectile that is able to penetrate and cause damage after exiting a material. Therefore, even though a projectile passes completely through a material, it can be said that it has not effectively penetrated the material if it can not cause harm after escaping the material. In particular, a .44 magnum SJHP projectile, generally having a mass between about 11 g and about 20 g, reaching the door at velocities between about 426 m and about 487 m per second (between about 1400 and about 1600 feet per second (FPS)) cannot effectively penetrate the flight deck door 10 and 100. Therefore, the flight deck doors 10 and 100 substantially eliminate the possibility of a projectile being fired from the passenger side 14 and effectively penetrating the flight deck door 10, 100 to the flight deck side 12.

It will be understood that various other alternatives may also use an armor layer as described in the present application. An alternative embodiment may be similar to the first embodiment, illustrated in Figure 2, except that the first lamination layer 20 is replaced with a non-perforated decorative laminate similar to layer 106, illustrated in Figure 3. In addition, layer 22 may be replaced with a woven glass phenolic prepreg similar to layer 26. Lastly, layer 30 may include any required number of Kevlar® layers to provide the ballistic resistance required for the flight deck door 10. Also, armor layer 30 may be positioned between the first section 20 and the second section 28. This alternative embodiment provides excellent ballistic resistance, especially on "gaps." Gaps may be formed due to structural requirements such as fasteners to install the door in the aircraft. Such gaps in the structure of the door can provide weak areas which may be more susceptible to intrusion. Nevertheless including a larger armor layer on the passenger compartment side of the door may decrease the effect that such fasteners and gaps have on the resistance of the armor layer.

The description of the invention is merely exemplary in nature, the claims defining the scope of the invention.

## Claims

1. Method for forming an armor layer for a door (10, 100) comprising:
providing a first layer (30, 108) of an armor material including a fiber structure with a resin surrounding the fibers;
providing a second layer (30, 108, 110) of an armor material including a fiber structure with a resin surrounding the fibers;
placing said first layer (30, 108) adjacent said second layer (30, 108, 110);
applying a pressure of at least 34.5 kPa (5 psi) but less than 207 kPa (30 psi) between said first layer (30, 108) and said second layer (30, 108, 110); and
heating said first layer (30, 108) and said second layer (30, 108, 110) to at least 120 °C such that applying said pressure and heating occurs simultaneously and continues for at least 30 minutes.

2. Method according to claim 1, further comprising:
providing at least ten layers of the armor material;
placing each of the layers substantially adjacent to one another to form a pre-laminate portion; and
curing the pre-laminate to form an armor layer laminate having a substantially affixed laminated substructure of the discrete armor layers.

3. Method according to claim 2, wherein curing the pre-laminate comprises:
applying at least 34.5 kPa (5 psi) to the pre-laminate portion;
heating the pre-laminate portion to at least 120°C;
and holding said pre-laminate at said pressure and said temperature tor at least 30 minutes.

4. Method according to claim 1, 2 or 3, wherein said first layer (30, 108) of armor and said second layer (30, 108, 110) of armor comprise layers of Kevlar material.

5. Method according to any of claims 1-4, further comprising:
providing a rigid layer (24) having an open-cell structure;
providing an adhesive layer (25, 27); and
operably affixing the armor layer laminate to the rigid layer (24) with the adhesive layer (25, 27) such that the door (10) is able to stop effective penetration of a projectile fired from a firearm.

## Patentansprüche

1. Verfahren zum Ausbilden einer Panzerschicht für eine Tür (10, 100), das aufweist:
Vorsehen einer ersten Schicht (30, 108) aus einem Panzerungsmaterial, das eine Faserstruktur aufweist, wobei die Fasern von einem Harz umgeben sind;
Vorsehen einer zweiten Schicht (30, 108, 110) aus einem Panzerungsmaterial, das eine Faserstruktur aufweist, wobei ein Harz die Fasern umgibt;
Platzieren der ersten Schicht (30, 108) neben der zweiten Schicht (30, 108, 110);
Ausüben eines Drucks von zumindest 34,5 kPa (5 psi), jedoch weniger als 207 kPa (30 psi) zwischen der ersten Schicht (30, 108) und der zweiten Schicht (30, 108, 110); und
Erwärmen der ersten Schicht (30, 108) und der zweiten Schicht (30, 108, 110) auf mindestens 120 °C, so dass das Ausüben des Drucks und das Erwärmen gleichzeitig und kontinuierlich für mindestens 30 Minuten erfolgt.

2. Verfahren nach Anspruch 1, das des Weiteren aufweist:
Vorsehen von mindestens zehn Schichten des Panzerungsmaterials;
Platzieren von jeder der Schichten im Wesentlichen neben der anderen, um ein Vorlaminatteil auszubilden; und
Aushärten des Vorlaminats, um ein Panzerschichtlaminat zu bilden, welches eine im Wesentlichen befestigte laminierte Substruktur aus den diskreten Panzerschichten aufweist.

3. Verfahren nach Anspruch 2, wobei ein Aushärten des Vorlaminats aufweist:
Ausüben von zumindest 34,5 kPa (5 psi) auf das Vorlaminatteil;
Erwärmen des Vorlaminatteils auf mindestens 120 °C;
und Halten des Vorlaminats bei dem Druck und bei der Temperatur für mindestens 30 Minuten.

4. Verfahren nach Anspruch 1, 2 oder 3, wobei die erste Schicht (30, 108) der Panzerung und die zweite Schicht (30, 108, 110) der Panzerung Schichten aus Kevlar-Material aufweist.

5. Verfahren nach einem der Ansprüche 1-4, das des Weiteren aufweist:
Vorsehen einer steifen Schicht (24) mit einer Struktur mit offenen Zellen;
Vorsehen einer Klebeschicht (25, 27); und
betriebliches Befestigen des Panzerschichtlaminats an der steifen Schicht (24) mit der Klebeschicht (25, 27), so dass die Tür (10) eine effektive Penetration eines aus einer Schusswaffe abgefeuerten Projektils stoppen kann.

## Revendications

1. Procédé de formation d'une couche de blindage pour une porte (10, 100) comprenant :
la fourniture d'une première couche (30, 108) d'un matériau de blindage comportant une structure fibreuse avec une résine entourant les fibres ;
la fourniture d'une deuxième couche (30, 108, 110) d'un matériau de blindage comportant une structure fibreuse avec une résine entourant les fibres ;
le positionnement de ladite première couche (30, 108) de façon adjacente à ladite deuxième couche (30, 108, 110) ;
l'application d'une pression d'au moins 34,5 kPa (5 psi) mais de moins de 207 kPa (30 psi) entre ladite première couche (30, 108) et ladite deuxième couche (30, 108, 110) ; et
le chauffage de ladite première couche (30, 108) et de ladite deuxième couche (30, 108, 110) à au moins 120 °C de telle sorte que l'application de ladite pression et le chauffage aient lieu simultanément et se poursuivent pendant au moins 30 minutes.

2. Procédé selon la revendication 1, comprenant en outre :
la fourniture d'au moins dix couches du matériau de blindage ;
le positionnement de chacune des couches de telle sorte qu'elles soient sensiblement adjacentes les unes aux autres pour former une partie pré-stratifiée ; et
le durcissement du pré-stratifié pour former un stratifié de couches de blindage ayant une sous-structure stratifiée sensiblement fixée constituée des couches de blindage individuelles.

3. Procédé selon la revendication 2, dans lequel le durcissement du pré-stratifié comprend :
l'application d'au moins 34,5 kPa (5 psi) à la partie pré-stratifiée ;
le chauffage de la partie pré-stratifiée à au moins 120 °C ;
et le maintien dudit pré-stratifié à ladite pression et à ladite température pendant au moins 30 minutes.

4. Procédé selon la revendication 1, 2 ou 3, dans lequel ladite première couche (30, 108) de blindage et ladite deuxième couche (30, 108, 110) de blindage comprennent des couches de Kevlar.

5. Procédé selon l'une quelconque des revendications 1 à 4, comprenant en outre :
la fourniture d'une couche rigide (24) ayant une structure à alvéoles ouvertes ;
la fourniture d'une couche adhésive (25, 27) ; et
la fixation de façon fonctionnelle du stratifié de couches de blindage à la couche rigide (24) avec la couche d'adhésif (25, 27) de telle sorte que la porte (10) soit capable de stopper la pénétration effective d'un projectile tiré à partir d'une arme à feu.
